# EUROPÄISCHE PATENTSCHRIFT

(11) **EP 3 096 989 B1**
(45) Veröffentlichungstag und Bekanntmachung des Hinweises auf die Patenterteilung: **18.04.2018**
(21) Anmeldenummer: 15702172.6
(22) Anmeldetag: 21.01.2015
(51) Int. Cl.: B60S 1/52, B60S 1/56, G02B 27/00, B60R 11/04

(54) **VORRICHTUNG ZUM REINIGEN EINER OPTISCHEN LINSE EINER PARKASSISTENZKAMERA**
DEVICE FOR CLEANING AN OPTICAL LENS OF A PARKING ASSISTANCE CAMERA
DISPOSITIF DE NETTOYAGE D'UNE LENTILLE OPTIQUE D'UNE CAMÉRA D'ASSISTANCE AU STATIONNEMENT

(30) Priorität: 24.01.2014 DE 102014201327; 05.02.2014 DE 102014202072
(43) Veröffentlichungstag der Anmeldung: 30.11.2016
(73) Patentinhaber: Bayerische Motoren Werke Aktiengesellschaft, 80809 München (DE)
(72) Erfinder: NIEMCZYK, Thomas, 81247 München (DE)
(86) Internationale Anmeldenummer: PCT/EP2015/051050
(87) Internationale Veröffentlichungsnummer: WO 2015/110439

(56) Entgegenhaltungen:
- EP-A1- 1 726 498
- FR-A1- 2 681 031
- US-A1- 2009 250 533
- US-A1- 2011 073 142

## Beschreibung

Die Erfindung betrifft eine Vorrichtung zum Reinigen einer optischen Linse einer an einem Fahrzeug angeordneten Parkassistenzkamera.

Des Weiteren betrifft die Erfindung ein Parkassistenzsystem für ein Fahrzeug, aufweisend wenigstens eine zumindest eine optische Linse umfassende, an dem Fahrzeug angeordnete Parkassistenzkamera.

Vorrichtungen zum Reinigen einer optischen Linse einer an einem Fahrzeug angeordneten Parkassistenzkamera sind beispielsweise aus den Offenlegungsschriften DE 100 12 004 A1 und DE 102 25 151 A1 bekannt.

Im Gegensatz zu Fahrerassistenzkameras, welche üblicherweise im Innenraum eines Fahrzeugs hinter einer Windschutzscheibe des Fahrzeugs angeordnet sind, sind Parkassistenzkameras unmittelbar äußeren Einflüssen, beispielsweise Witterungseinflüssen, ausgesetzt. Durch die äußeren Einflüsse bedingte Verschmutzungen einer optischen Linse einer Parkassistenzkamera und durch Steinschlag bedingte Beschädigungen an der optischen Linse beeinträchtigen die mit einer Parkassistenzkamera erzielbare Bildqualität, was insbesondere eine automatisierte Bildverarbeitung erschwert. Eine weitere häufig gegebene und daher schwerwiegende Beeinträchtigung der mit einer Parkassistenzkamera erzielbaren Bildqualität stellen an einer optischen Linse der Parkassistenzkamera vorhandene Wassertropfen dar. Ein Verbau von Parkassistenzkameras an einem Ort hoher Luftströmung zur Beseitigung der an einer optischen Linse vorhandenen Wassertropfen ist in der Regel aufgrund von Designanforderungen schwer realisierbar.

Aus der US 2009/250533 A1 ist eine an einer Außenseite eines Fahrzeughecks angeordnete Kamera bekannt, die mit einer Reinigungsvorrichtung versehen ist.

Aufgabe der Erfindung ist es, eine optimale Reinigung einer optischen Linse einer an einem Fahrzeug angeordneten Parkassistenzkamera zu ermöglichen, ohne dabei einen Bildwinkel der optischen Linse dauerhaft einzuschränken.

Diese Aufgabe wird durch eine Vorrichtung gemäß Patentanspruch 1 und ein Parkassistenzsystem gemäß Patentanspruch 4 gelöst. Vorteilhafte Ausgestaltungen sind in den Unteransprüchen wiedergegeben, welche jeweils für sich genommen oder in verschiedener Kombinationen miteinander einen Aspekt der Erfindung darstellen können.

Mit Patentanspruch 1 wird eine Vorrichtung zum Reinigen einer optischen Linse einer an einem Fahrzeug angeordneten Parkassistenzkamera, aufweisend
- wenigstens einen unbeweglich und die optische Linse radial außen teilweise umgebend an der optischen Linse anordbaren inneren Ringkörper, an dem eine ringförmig und zum Gegenstandsraum der optischen Linse hin offen ausgebildete Aufnahme angeordnet ist, und
- wenigstens einen koaxial zu dem inneren Ringkörper und zumindest teilweise innerhalb der Aufnahme angeordneten äußeren Ringkörper,
- wobei der äußere Ringkörper zwischen einer ausgefahrenen Reinigungsstellung und einer eingefahrenen Ruhestellung axial beweglich relativ zu dem inneren Ringkörper angeordnet ist,
- wobei der äußere Ringkörper in Richtung seiner Ruhestellung mit einer Rückstellkraft beaufschlagt ist,
- wobei zwischen dem inneren Ringkörper und dem äußeren Ringkörper wenigstens einer Fluidkammer angeordnet ist,
- wobei der äußere Ringkörper derart ausgebildet ist, dass die Fluidkammer bei in seiner Ruhestellung befindlichem äußerem Ringkörper gegenüber der Umgebung der Vorrichtung geschlossen ist,
- wobei der äußere Ringkörper derart ausgebildet ist, dass die Fluidkammer bei in seiner Reinigungsstellung befindlichem äußerem Ringkörper derart gegenüber der Umgebung der Vorrichtung offen ist, dass ein in die Fluidkammer eingeleitetes Fluid in Richtung der optischen Linse aus der Fluidkammer austritt, und
- wobei an dem inneren Ringkörper wenigstens eine in die Fluidkammer mündende Fluidzuführung angeordnet ist.

Erfindungsgemäß kann der äußere Ringkörper zur Reinigung der optischen Linse mittels einer Beaufschlagung der zwischen dem inneren Ringkörper und dem äußeren Ringkörper angeordneten Fluidkammer mit einem unter Druck stehenden Fluid aus seiner eingefahrenen Ruhestellung, in der der äußere Ringkörper den Bildwinkel der optischen Linse nicht beeinträchtigt, relativ zu dem inneren Ringkörper entgegen der auf den äußeren Ringkörper in Richtung seiner eingefahrenen Ruhestellung einwirkenden Rückstellkraft axial bewegt und hierdurch in seine ausgefahrene Reinigungsstellung überführt werden, in welcher der Bildwinkel der optischen Linse, insbesondere einer Ultra-Weitwinkel-Optik, durch den äußeren Ringkörper geringfügig beeinträchtigt sein kann. Nach einer Beaufschlagung der Fluidkammer mit einem unter Druck stehenden Fluid wird der äußere Ringkörper aufgrund der auf ihn in Richtung seiner Ruhestellung einwirkenden Rückstellkraft, insbesondere automatisch, wieder in seine Ruhestellung überführt. Die Gesamtanordnung aus innerem Ringkörper und äußerem Ringkörper ist somit teleskopierbar.

Da der innere Ringkörper unbeweglich an der optischen Linse angeordnet ist, also keine Bewegungen relativ zu der optischen Linse ausführen kann, ist es möglich, den inneren Ringkörper als Teil der Parkassistenzkamera, beispielsweise als Halter für die optische Linse, einzusetzen. Der innere Ringkörper umgibt die optische Linse radial außen teilweise vorzugsweise derart, dass der Bildwinkel der optischen Linse nicht durch den inneren Ringkörper beeinträchtigt ist. Hierbei kann der innere Ringkörper kreisrund, elliptisch oder oval und insbesondere an die Formgebung der optischen Linse angepasst sein. Auch ist je nach Anwendungsfall eine polygonale Ausgestaltung des inneren Ringkörpers möglich. Des Weiteren kann der innere Ringkörper in seiner Formgebung auch dadurch von einem idealen Ring abweichen, dass er innerhalb eines äußeren ringförmigen Abschnitts eine massive Materialverstärkung aufweist.

Der koaxial zu dem inneren Ringkörper angeordnete äußere Ringkörper kann den inneren Ringkörper radial außen teilweise oder vollständig umgeben. Auch können die Dimensionierungen der beiden Ringkörper zumindest in axialer Richtung gleich sein. Der äußere Ringkörper kann ebenfalls kreisrund, elliptisch oder oval und insbesondere an die Formgebung des inneren Ringkörpers angepasst sein. Zudem ist je nach Anwendungsfall eine polygonale Ausgestaltung des äußeren Ringkörpers möglich.

Die Beaufschlagung des äußeren Ringkörpers in Richtung seiner Ruhestellung mit einer Rückstellkraft kann beispielsweise passiv über mechanische Mittel, insbesondere wenigstens eine Zu- oder Druckfeder, oder passiv oder aktiv über elektromagnetische Mittel erfolgen.

Unter dem Gegenstandsraum der optischen Linse ist der Raum vor der optischen Linse zu verstehen, in dem auch der Bildwinkel der optischen Linse und das Sichtfeld der optischen Linse liegen.

Der äußere Ringkörper ist derart ausgebildet, dass die Fluidkammer bei in seiner Ruhestellung befindlichem äußerem Ringkörper gegenüber der Umgebung geschlossen ist, so dass kein in die Fluidkammer eingeleitetes Fluid in die Umgebung gelangen kann. Der äußere Ringkörper kann hierbei entsprechend einem Ventil mit dem inneren Ringkörper zusammenwirken. Der äußere Ringkörper ist des Weiteren derart ausgebildet, dass die Fluidkammer bei in seiner Reinigungsstellung befindlichem äußerem Ringkörper derart gegenüber der Umgebung offen ist, dass ein in die Fluidkammer eingeleitetes Fluid in Richtung der optischen Linse aus der Fluidkammer austritt. Hierdurch kann zum Reinigen der optischen Linse das aus der Fluidkammer austretende Fluid, beispielsweise in Form eines Fluidstrahls, auf die optische Linse gerichtet werden.

An dem inneren Ringkörper ist wenigstens eine in die Fluidkammer mündende Fluidzuführung angeordnet, welche wenigstens einen Fluidkanal aufweisen kann. Die Fluidzuführung kann fluidleitend mit einer Druckerzeugungseinrichtung zum Erzeugen eines unter Druck stehenden Fluids verbunden sein, wobei das Fluid gasförmig oder flüssig sein kann.

Die beiden Ringkörper können aus demselben oder unterschiedlichen Werkstoffen hergestellt sein. Als Werkstoff kommt beispielsweise Metall, Kunststoff oder ein Verbundwerkstoff in Frage.

Nach einer vorteilhaften Ausgestaltung ist der äußere Ringkörper im Querschnitt U-förmig ausgebildet und weist zwei Schenkel und einen die Schenkel miteinander verbindenden Steg auf, wobei der radial innere Schenkel kürzer als der radial äußere Schenkel ausgebildet ist. Befindet sich der äußere Ringkörper in seiner Reinigungsstellung, wird durch diese Ausgestaltung ein ringförmiger Spalt zwischen dem inneren Ringkörper und dem äußeren Ringkörper ausgebildet, über den die Fluidkammer gegenüber der Umgebung der Vorrichtung offen ist und über den die optische Linse zu ihrer optimalen Reinigung von verschiedenen Richtungen aus mit einem Fluid beaufschlagt werden kann. Alternativ kann der radial innere Schenkel des äußeren Ringkörpers annähernd oder genauso lang ausgebildet sein wie der radial äußere Schenkel, wobei an dem radial inneren Schenkel wenigstens eine, vorzugsweise zwei oder mehrere, Auslassöffnungen angeordnet sind, über welche die Fluidkammer bei in seiner Reinigungsstellung befindlichem äußerem Ringkörper gegenüber der Umgebung der Vorrichtung offen ist und über welche die optische Linse zu ihrer optimalen Reinigung von verschiedenen Richtungen aus mit einem Fluid beaufschlagt werden kann.

Gemäß einer weiteren vorteilhaften Ausgestaltung ist an dem Steg und/oder an dem radial inneren Schenkel wenigstens eine Düse angeordnet, die fluidleitend mit der Fluidzuführung oder einer weiteren Fluidzuführung verbindbar ist und die eingerichtet ist, ein in die Düse eingeleitetes Fluid der bei in seiner Reinigungsstellung befindlichem äußerem Ringkörper auf die optische Linse zu richten. Hiernach kann die Düse über die an dem inneren Ringkörper ausgebildete Fluidzuführung oder über eine separate weitere Fluidzuführung zur Reinigung der optischen Linse mit einem Fluid beaufschlagt werden. In erstem Fall kann vorgesehen sein, dass der Druckverlust durch das aus der Fluidkammer über die wenigstens eine Düse austretende Fluid derart gering gegenüber dem in der Fluidkammer herrschenden Druck ist, dass der äußere Ringkörper während der Reinigung der optischen Linse in seiner ausgefahrenen Reinigungsstellung verbleibt. Bei dieser Ausgestaltung ist es auch möglich, dass die Fluidkammer bei in seiner ausgefahrenen Reinigungsstellung befindlichem äußerem Ringkörper nicht gegenüber der Umgebung der Vorrichtung offen ist, wobei der in der Fluidkammer herrschende Druck im Wesentlichen zur Verlagerung des äußeren Ringkörpers von seiner Ruhestellung in seine Reinigungsstellung bzw. eine entsprechende Verlagerung der an dem äußeren Ringkörper angeordneten Düsen verwendet wird, wohingegen die Reinigung der optischen Linse allein über die Düsen erfolgt. Erst wenn die Fluidkammer nicht mehr mit einem unter Druck stehenden Fluid beaufschlagt wird, wird der äußere Ringkörper durch die auf ihn in Richtung seiner eingefahrenen Ruhestellung einwirkende Rückstellkraft wieder in diese Ruhestellung überführt. An dem Steg und/oder dem radial inneren Schenkel des äußeren Ringkörpers können auch zwei oder mehrere Düsen umfänglich verteilt angeordnet sein.

Mit Patentanspruch 4 wird ein Parkassistenzsystem für ein Fahrzeug vorgeschlagen, aufweisend wenigstens eine zumindest eine optische Linse umfassende, an dem Fahrzeug angeordnete Parkassistenzkamera, gekennzeichnet durch wenigstens eine Vorrichtung nach einer der vorgenannten Ausgestaltungen oder einer beliebigen Kombination derselben. Mit diesem Parkassistenzsystem sind die oben mit Bezug auf die Vorrichtung genannten Vorteile entsprechend verbunden. Das Parkassistenzsystem kann auch für jede optische Linse eine separate entsprechende Vorrichtung aufweisen.

Gemäß einer vorteilhaften Ausgestaltung weist das Parkassistenzsystem wenigstens eine fluidleitend mit der an dem inneren Ringkörper angeordneten Fluidzuführung verbundene Druckerzeugungseinrichtung zum Erzeugen eines unter Druck stehenden Fluids auf. Hierzu kann die Druckerzeugungseinrichtung eine Pumpe aufweisen. Die Druckerzeugungseinrichtung kann zur Erzeugung eines unter Druck stehenden gasförmigen Fluids, beispielsweise Druckluft, und/oder flüssigen Fluids, beispielsweise Wasser mit oder ohne Reinigungsmittelzusatz, eingerichtet sein.

Nach einer weiteren vorteilhaften Ausgestaltung weist das Parkassistenzsystem wenigstens ein fluidleitend mit der Druckerzeugungseinrichtung verbundenes Fluidreservoir für ein gasförmiges oder flüssiges Fluid auf.

Eine weitere vorteilhafte Ausgestaltung sieht vor, dass die Druckerzeugungseinrichtung eingerichtet ist, zunächst ein unter Druck stehendes flüssiges Fluid und anschließend ein unter Druck stehendes gasförmiges Fluid zu erzeugen. Hierdurch kann zunächst eine Reinigung der optischen Linse mit dem flüssigen Fluid vorgenommen und anschließend die optische Linse zur Beseitigung des flüssigen Fluids von der optischen Linse mittels des gasförmigen Fluids, beispielsweise Druckluft, getrocknet werden.

Ferner wird es als vorteilhaft erachtet, wenn das Parkassistenzsystem wenigstens eine fluidleitend mit der an dem äußeren Ringkörper angeordneten Düse verbundene weitere Druckerzeugungseinrichtung zum Erzeugen eines unter Druck stehenden Fluids umfasst. Hierbei können die Fluidzuführung des inneren Ringkörpers und die Fluidkammer allein dazu verwendet werden, den äußeren Ringkörper von seiner Ruhestellung in seine Reinigungsstellung zu verlagern, wohingegen die Düse zur Reinigung der optischen Linse verwendet wird.

Weitere Einzelheiten, Merkmale und Vorteile der Erfindung ergeben sich aus der nachfolgenden Beschreibung und den Figuren. Es zeigen:
- Figur 1: eine schematische Schnittdarstellung eines Ausführungsbeispiels für ein erfindungsgemäßes Parkassistenzsystem im Ruhezustand,
- Figur 2: eine schematische Schnittdarstellung des in Figur 1 gezeigten Parkassistenzsystems im Reinigungszustand,
- Figur 3: eine schematische Schnittdarstellung eines weiteren Ausführungsbeispiels für ein erfindungsgemäßes Parkassistenzsystem im Reinigungszustand, und
- Figur 4: eine schematische Vorderansicht des in Figur 3 gezeigten Ausführungsbeispiels für ein erfindungsgemäßes Parkassistenzsystem.

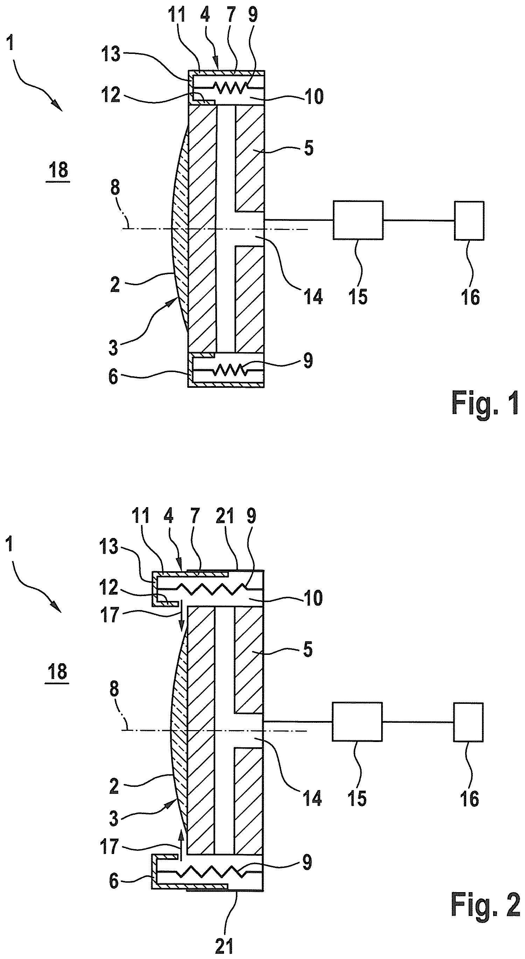

Figur 1 zeigt eine schematische Schnittdarstellung eines Ausführungsbeispiels für ein erfindungsgemäßes Parkassistenzsystem 1 für ein Fahrzeug im Ruhezustand. Das Parkassistenzsystem 1 umfasst eine eine optische Linse 2 aufweisende, an dem Fahrzeug angeordnete Parkassistenzkamera 3 sowie eine Vorrichtung 4 zum Reinigen der optischen Linse 2.

Die Vorrichtung 4 umfasst einen unbeweglich und die optische Linse 2 radial außen teilweise umgebend an der optischen Linse 2 angeordneten inneren Ringkörper 5, an dem eine ringförmig und zum Gegenstandsraum 18 der optischen Linse 2 hin offen ausgebildete Aufnahme 7 angeordnet ist. Der Weiteren umfasst die Vorrichtung 4 einen bezüglich der gemeinsamen Achse 8 koaxial zu dem inneren Ringkörper 5 und in seiner gezeigten Ruhestellung vollständig innerhalb der Aufnahme 7 angeordneten äußeren Ringkörper 6.

Der äußere Ringkörper 6 ist zwischen der in Figur 2 gezeigten ausgefahrenen Reinigungsstellung und der in Figur 1 gezeigten eingefahrenen Ruhestellung axial beweglich relativ zu dem inneren Ringkörper 5 angeordnet, wobei der äußere Ringkörper 6 in Richtung seiner Ruhestellung mit einer Rückstellkraft beaufschlagt ist. Die Rückstellkraft wird in der gezeigten Ausführungsform mittels Zugfedern 9 erzeugt.

Zwischen dem inneren Ringkörper 5 und dem äußeren Ringkörper 6 ist eine ringförmig ausgebildete Fluidkammer 10 angeordnet. Hierzu ist der äußere Ringkörper 6 im Querschnitt U-förmig ausgebildet. Zudem weist der äußere Ringkörper 6 zwei Schenkel 11 und 12 sowie einen die Schenkel 11 und 12 miteinander verbindenden Steg 13 auf, wobei der radial innere Schenkel 12 kürzer als der radial äußere Schenkel 11 ausgebildet ist. An dem inneren Ringkörper 5 ist eine sich verzweigende, in die Fluidkammer 10 mündende Fluidzuführung 14 angeordnet, welche nicht gezeigte Einspritzdüsen umfassen kann.

Der äußere Ringkörper 6 ist derart ausgebildet, dass die Fluidkammer 10 bei in seiner Ruhestellung befindlichem äußerem Ringkörper 6 gegenüber der Umgebung der Vorrichtung 4 geschlossen ist. Des Weiteren ist der äußere Ringkörper 6 derart ausgebildet, dass die Fluidkammer 10 bei in seiner Reinigungsstellung befindlichem äußerem Ringkörper 6 derart gegenüber der Umgebung der Vorrichtung 4 offen ist, dass ein in die Fluidkammer 10 eingeleitetes Fluid in Richtung der optischen Linse 2 aus der Fluidkammer 10 austritt, wie es in Figur 2 dargestellt ist.

Das Parkassistenzsystem 1 umfasst des Weiteren eine fluidleitend mit der an dem inneren Ringkörper 5 angeordneten Fluidzuführung 14 verbundene Druckerzeugungseinrichtung 15 zum Erzeugen eines unter Druck stehenden Fluids. Das Parkassistenzsystem 1 umfasst zudem ein fluidleitend mit der Druckerzeugungseinrichtung 15 verbundenes Fluidreservoir 16 für ein gasförmiges oder flüssiges Fluid. Die Druckerzeugungseinrichtung 15 ist eingerichtet, zunächst ein unter Druck stehendes flüssiges Fluid und anschließend ein unter Druck stehendes gasförmiges Fluid zu erzeugen.

Figur 2 zeigt eine schematische Schnittdarstellung des in Figur 1 gezeigten Parkassistenzsystems 1 im Reinigungszustand. Der äußere Ringkörper 6 befindet sich in seiner Reinigungsstellung, wodurch die Fluidkammer 10 derart gegenüber der Umgebung der Vorrichtung 4 offen ist, dass ein in die Fluidkammer 10 eingeleitetes Fluid in Richtung der optischen Linse 2 aus der Fluidkammer 10 austritt, wie es durch die Pfeile 17 angedeutet ist. In Figur 2 ist schematisch mit dem Bezugszeichen 21 eine Abdichtung nach oben und unten hin dargestellt, um den nötigen Staudruck aufbauen zu können.

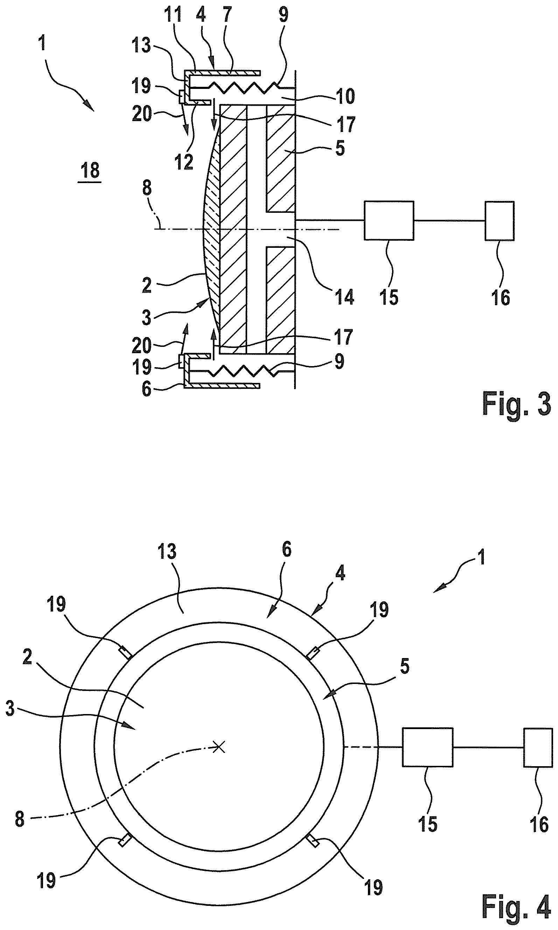

Analoges gilt natürlich auch für das Ausführungsbeispiel gemäß Figur 3, obgleich nicht dargestellt.

Figur 3 zeigt eine schematische Schnittdarstellung eines weiteren Ausführungsbeispiels für ein erfindungsgemäßes Parkassistenzsystem 1 im Reinigungszustand. Im Unterschied zu dem in den Figuren 1 und 2 gezeigten Ausführungsbeispiel sind an dem Steg 13 Düsen 19 angeordnet, die fluidleitend mit der Fluidkammer 10 und somit mit der Fluidzuführung 14 verbunden sind. Mittels der Düsen 19 kann ein Fluid in Richtung der die optischen Linse 2 geleitet werden, wie es durch die Pfeile 20 angedeutet ist.

Figur 4 zeigt eine schematische Vorderansicht des in Figur 3 gezeigten Ausführungsbeispiels für ein erfindungsgemäßes Parkassistenzsystem 1. Die Vorrichtung 4 weit vier umfänglich verteilt angeordnete Düsen 19 auf.

### Bezugszeichenliste:

- 1: Parkassistenzsystem
- 2: optische Linse
- 3: Parkassistenzkamera
- 4: Vorrichtung
- 5: innerer Ringkörper
- 6: äußerer Ringkörper
- 7: Aufnahme
- 8: Achse
- 9: Zugfeder
- 10: Fluidkammer
- 11: radial äußerer Schenkel
- 12: radial innerer Schenkel
- 13: Steg
- 14: Fluidzuführung
- 15: Druckerzeugungseinrichtung
- 16: Fluidreservoir
- 17: Pfeil
- 18: Gegenstandsraum
- 19: Düse
- 20: Pfeil

## Patentansprüche

1. Vorrichtung (4) zum Reinigen einer optischen Linse (2) einer an einem Fahrzeug angeordneten Parkassistenzkamera (3), aufweisend
- wenigstens einen unbeweglich und die optische Linse (2) radial außen teilweise umgebend an der optischen Linse (2) anordbaren inneren Ringkörper (5), an dem eine ringförmig und zum Gegenstandsraum (18) der optischen Linse (2) hin offen ausgebildete Aufnahme (7) angeordnet ist, und
- wenigstens einen koaxial zu dem inneren Ringkörper (5) und zumindest teilweise innerhalb der Aufnahme (7) angeordneten äußeren Ringkörper (6),
**dadurch gekennzeichnet,**
- **dass** der äußere Ringkörper (6) zwischen einer ausgefahrenen Reinigungsstellung und einer eingefahrenen Ruhestellung axial beweglich relativ zu dem inneren Ringkörper (5) angeordnet ist,
- **dass** der äußere Ringkörper (6) in Richtung seiner Ruhestellung mit einer Rückstellkraft beaufschlagt ist,
- **dass** zwischen dem inneren Ringkörper (5) und dem äußeren Ringkörper (6) wenigstens einer Fluidkammer (10) angeordnet ist,
- **dass** der äußere Ringkörper (6) derart ausgebildet ist, dass die Fluidkammer (10) bei in seiner Ruhestellung befindlichem äußerem Ringkörper (6) gegenüber der Umgebung der Vorrichtung (4) geschlossen ist,
- **dass** der äußere Ringkörper (6) derart ausgebildet ist, dass die Fluidkammer (10) bei in seiner Reinigungsstellung befindlichem äußerem Ringkörper (6) derart gegenüber der Umgebung der Vorrichtung (4) offen ist, dass ein in die Fluidkammer (10) eingeleitetes Fluid in Richtung der optischen Linse (2) aus der Fluidkammer (10) austritt, und
- **dass** an dem inneren Ringkörper (5) wenigstens eine in die Fluidkammer (10) mündende Fluidzuführung (14) angeordnet ist.

2. Vorrichtung (4) nach Anspruch 1, **dadurch gekennzeichnet, dass** der äußere Ringkörper (6) im Querschnitt U-förmig ausgebildet ist und zwei Schenkel (11, 12) und einen die Schenkel (11, 12) miteinander verbindenden Steg (13) aufweist, wobei der radial innere Schenkel (12) kürzer als der radial äußere Schenkel (11) ausgebildet ist.

3. Vorrichtung (4) nach Anspruch 2, **dadurch gekennzeichnet, dass** an dem Steg (13) und/oder an dem radial inneren Schenkel (12) wenigstens eine Düse (19) angeordnet ist, die fluidleitend mit der Fluidzuführung (14) oder einer weiteren Fluidzuführung verbindbar ist und die eingerichtet ist, ein in die Düse (19) eingeleitetes Fluid der bei in seiner Reinigungsstellung befindlichem äußerem Ringkörper (6) auf die optische Linse (2) zu richten.

4. Parkassistenzsystem (1) für ein Fahrzeug, aufweisend wenigstens eine zumindest eine optische Linse (2) umfassende, an dem Fahrzeug angeordnete Parkassistenzkamera (3), **gekennzeichnet durch** wenigstens eine Vorrichtung (4) nach einem der Ansprüche 1 bis 3.

5. Parkassistenzsystem (1) nach Anspruch 4, **gekennzeichnet durch** wenigstens eine fluidleitend mit der an dem inneren Ringkörper (5) angeordneten Fluidzuführung (14) verbundene Druckerzeugungseinrichtung (15) zum Erzeugen eines unter Druck stehenden Fluids.

6. Parkassistenzsystem (1) nach Anspruch 5, **gekennzeichnet durch** wenigstens ein fluidleitend mit der Druckerzeugungseinrichtung (15) verbundenes Fluidreservoir (16) für ein gasförmiges oder flüssiges Fluid.

7. Parkassistenzsystem (1) nach Anspruch 5 oder 6, **dadurch gekennzeichnet, dass** die Druckerzeugungseinrichtung (15) eingerichtet ist, zunächst ein unter Druck stehendes flüssiges Fluid und anschließend ein unter Druck stehendes gasförmiges Fluid zu erzeugen.

8. Parkassistenzsystem (1) nach einem der Ansprüche 4 bis 7, **gekennzeichnet durch** wenigstens eine fluidleitend mit der an dem äußeren Ringkörper (6) angeordneten Düse (19) verbundene weitere Druckerzeugungseinrichtung zum Erzeugen eines unter Druck stehenden Fluids.

## Claims

1. A device (4) for cleaning an optical lens (2) of a parking assistance camera (3) arranged on a vehicle, having
- at least one inner ring body (5) which can be arranged on the optical lens (2) so as to be immovable and partially surrounding the optical lens (2) radially on the outside, on which body an annular receptacle (7) is arranged which is designed to be open towards the object space (18) of the optical lens (2), and
- at least one outer ring body (6) arranged coaxially to the inner ring body (5) and at least partially within the receptacle (7),
**characterised in that**
- the outer ring body (6) is arranged so as to be axially movable relative to the inner ring body (5) between an extended cleaning position and a retracted inoperative position,
- the outer ring body (6) is acted upon by a restoring force in the direction of its inoperative position,
- at least one fluid chamber (10) is arranged between the inner ring body (5) and the outer ring body (6),
- the outer ring body (6) is designed such that the fluid chamber (10) is closed relative to the surroundings of the device (4) when the outer ring body (6) is in its inoperative position,
- the outer ring body (6) is designed such that the fluid chamber (10) is open relative to the surroundings of the device (4) when the outer ring body (6) is in its cleaning position such that a fluid introduced into the fluid chamber (10) emerges from the fluid chamber (10) in the direction of the optical lens (2), and
- at least one fluid supply means (14) opening into the fluid chamber (10) is arranged on the inner ring body (5).

2. A device (4) according to Claim 1, **characterised in that** the outer ring body (6) is U-shaped in cross-section and has two legs (11, 12) and a crosspiece (13) which connects the legs (11, 12) together, the radially inner leg (12) being designed shorter than the radially outer leg (11).

3. A device (4) according to Claim 2, **characterised in that** at least one nozzle (19) is arranged on the crosspiece (13) and/or on the radially inner leg (12), which nozzle can be connected in fluid-conducting manner to the fluid supply means (14) or a further fluid supply means and which is adapted to direct a fluid introduced into the nozzle (19) onto the optical lens (2) when the outer ring body (6) is in its cleaning position.

4. A parking assistance system (1) for a vehicle, having at least one parking assistance camera (3) which comprises at least one optical lens (2) and is arranged on the vehicle, **characterised by** at least one device (4) according to one of Claims 1 to 3.

5. A parking assistance system (1) according to Claim 4, **characterised by** at least one pressure generation means (15), connected in fluid-conducting manner to the fluid supply means (14) arranged on the inner ring body (5), for generating a pressurised fluid.

6. A parking assistance system (1) according to Claim 5, **characterised by** at least one fluid reservoir (16), connected in fluid-conducting manner to the pressure generation means (15), for a gaseous or liquid fluid.

7. A parking assistance system (1) according to Claim 5 or Claim 6, **characterised in that** the pressure generation means (15) is adapted to generate first of all a pressurised liquid fluid and then a pressurised gaseous fluid.

8. A parking assistance system (1) according to one of Claims 4 to 7, **characterised by** at least one further pressure generation means, connected in fluid-conducting manner to the nozzle (19) arranged on the outer ring body (6), for generating a pressurised fluid.

## Revendications

1. Dispositif (4) de nettoyage d'une lentille optique (2) d'une caméra d'assistance au stationnement (3) montée sur un véhicule comprenant :
- au moins un corps annulaire interne (5) fixe pouvant être monté sur la lentille optique (2) en l'entourant partiellement radialement vers l'extérieur, sur lequel est monté un logement annulaire (7) ouvert vers l'espace objet (18) de la lentille optique (2), et
- au moins un corps annulaire externe (6) monté coaxialement au corps annulaire interne (5) et au moins partiellement à la partie interne du logement (7),
**caractérisé en ce que**
- le corps annulaire externe (6) est mobile axialement par rapport au corps annulaire interne (5) entre une position de nettoyage déployée et une position de repos repliée,
- le corps annulaire externe (6) est sollicité par une force de rappel en direction de sa position de repos,
- au moins une chambre de fluide (10) est située entre le corps annulaire interne (5) et le corps annulaire externe (6),
- le corps annulaire externe (6) est réalisé de sorte que, lorsqu'il est dans sa position de repos la chambre de fluide (10) soit fermée vis-à-vis de l'environnement du dispositif (4),
- le corps annulaire externe (6) est réalisé de sorte que, lorsqu'il est dans sa position de nettoyage la chambre de fluide (10) soit ouverte vis-à-vis de l'environnement du dispositif (4) pour qu'un fluide introduit dans la chambre de fluide (10) sorte de cette chambre (10) en direction de la lentille optique (2), et
- au moins une entrée de fluide (14) débouchant dans la chambre de fluide (10) est positionnée dans le corps annulaire interne (5).

2. Dispositif (4) conforme à la revendication 1,
**caractérisé en ce que**
le corps annulaire externe (6) a une section en forme de U et comporte deux branches (11, 12) et une barrette (13) reliant les branches (11, 12), la branche interne radiale (12) étant plus courte que la branche externe radiale (11).

3. Dispositif (4) conforme à la revendication 2,
**caractérisé en ce que**
sur la barrette (13) et/ou sur la branche radiale interne (12) est montée au moins une buse (19) qui peut être reliée fluidiquement à l'entrée de fluide (14) ou à une autre entrée de fluide, et est susceptible de diriger sur la lentille optique (2) un fluide introduit dans celle-ci du corps annulaire externe (6) se trouvant dans sa position de nettoyage.

4. Système d'assistance au stationnement (1) destiné à un véhicule comprenant au moins une caméra d'assistance au stationnement (3) équipée d'au moins une lentille optique (2),
**caractérisé par**
au moins un dispositif (4) conforme à l'une des revendications 1 à 3.

5. Système d'assistance au stationnement (1) conforme à la revendication 4,
**caractérisé par**
au moins un dispositif générateur de pression (15) relié fluidiquement à l'entrée de fluide (14) située sur le corps annulaire interne (5) pour permettre d'obtenir un fluide sous pression.

6. Système d'assistance au stationnement (1) conforme à la revendication 5,
**caractérisé par**
au moins un réservoir (16) de fluide gazeux ou liquide relié fluidiquement au dispositif générateur de pression (15).

7. Système d'assistance au stationnement (1) conforme à la revendication 5 ou 6,
**caractérisé en ce que**
le dispositif générateur de pression (15) est susceptible de produire tout d'abord un liquide sous pression puis un gaz sous pression.

8. Système d'assistance au stationnement (1) conforme à l'une des revendications 4 à 7,
**caractérisé par** au moins un autre dispositif générateur de pression relié fluidiquement à la buse (19) montée sur le corps annulaire externe (6) pour permettre d'obtenir un fluide sous pression.
